# EUROPEAN PATENT SPECIFICATION

(11) **EP 4 147 752 B1**
(45) Date of publication and mention of the grant of the patent: **02.04.2025**
(21) Application number: 21196058.8
(22) Date of filing: 10.09.2021
(51) Int. Cl.: A62B 35/00, E04G 21/32, F03D 80/50, B25B 11/00

(54) **PERSON ANCHOR UNIT FOR PERSON FALL SAFETY USING ONE OR MORE PERMANENT MAGNETS**
PERSONENVERANKERUNGSEINHEIT ZUR STURZSICHERUNG VON PERSONEN MIT EINEM ODER MEHREREN PERMANENTMAGNETEN
UNITÉ D'ANCRAGE DE PERSONNE POUR LA SÉCURITÉ DE PERSONNE CONTRE LES CHUTES UTILISANT UN OU PLUSIEURS AIMANTS PERMANENTS

(43) Date of publication of application: 15.03.2023
(73) Proprietor: Engiso ApS, 6700 Esbjerg (DK)
(72) Inventor: Øllgaard, Børge, 6700 Esbjerg (DK)
(74) Representative: Patrade A/S

(56) References cited:
- WO-A1-2010/088476
- AU-A1- 2016 234 908
- GB-A- 2 339 633
- US-A1- 2013 320 686
- US-A1- 2014 246 269
- US-A1- 2015 014 095

## Description

### Field of the Invention

The present invention relates to a person anchor unit for person fall safety and a method for testing connection strength between an anchor surface comprising magnetizable material and the person anchor unit.

### Background of the Invention

Fall safety is important on many different sites including, but not limited to, offshore sites such as wind turbine generators, where there is a need for fall safety.

In many cases, the fall safety unit is a permanent installation forming part of a wall or celling or floor. Thereby, it is relatively easy to ensure the connection strength between the fall safety unit and the surface, since the fall safety unit is attached to the surface using one or more screws or bolts.

It is however more difficult to ensure the connection strength between a fall safety unit for person fall safety, where the fall safety unit is connected without using screws or bolts.

Temporary safety units exist for scaffolding or the like, however at the moment there exists few magnetic person anchor unit adapted for fall safety A known magnetic anchor unit is described in US 2015/014095 A1.

Thus, there is a need for a person anchor unit with sufficient strength which can be handled by one person while having a simple mechanical method for testing the connection strength.

### Object of the Invention

It is an object of the invention to provide a person anchor unit for person fall safety and a method for testing connection strength between an anchor surface comprising magnetizable material and the person anchor unit.

### Description of the Invention

An object of the invention is achieved by a person anchor unit for person fall safety. The person anchor unit comprises
- a connection side comprising a connection surface adapted for facing an anchor surface comprising magnetizable material;
- an anchor point for attaching a safety line;
- one or more permanent magnets positioned at or near the connection surface and
- at least one test unit for testing the connection strength between the one or more permanent magnets and the anchor surface, the at least one test unit, which at least one test unit comprises
   - a first displacement member being displaceable between a retracted position and an extended position, wherein the first displacement member at the extended position engages the anchor surface;
   - a tool connection point mechanically linked to the first displacement member, wherein actuation of the tool connection point causes displacement of the first displacement member between the retracted position and the extended position.

The person anchor unit is a temporary fall safety unit for a single person. In theory, the person anchor unit could be used for several persons provided that the one or more permanent magnets can provide the necessary attraction force. However, in this case one could use several person anchor units instead with the same effect.

The person anchor unit is a single unit such that the person anchor unit can be handled by a single person, who only have to handle the person anchor unit using a tool adapted for engaging the tool connection point. Thus, the test unit is for example an integrated part of the person anchor unit.

The one or more permanent magnets are positioned at or near the connection surface. The one or more permanent magnets proximity to the connection surface determines the strength of the one or more permanent magnets attachment to the anchor surface. The one or more permanent magnets proximity to the connection surface is controlled by the at least one test unit.

The one or more permanent magnets may be fitted with a rubber surface or another material adapted to increase friction between the one or more permanent magnets and the anchor surface, when the one or more permanent magnets may form part of the connection surface. Thereby, the one or more permanent magnets will in part help prevent movement when experiencing forces with a force component parallel to the anchor surface.

The rubber of the rubber surface may be EPDM rubber or the like.

The connection surface may be further fitted with additional areas of rubber surface or another material adapted to increase friction between the person anchor unit and the anchor surface. The rubber of the rubber surface may be EPDM rubber or the like.

In another embodiment, the one or more permanent magnets are attached to the person anchor unit by means allowing the individual magnets to slightly pivot about an axis of the individual magnet, enabling the connection surface to curve, for better attachment of the person anchor unit to a curved anchor surface for instance on a wind turbine tower.

The magnetizable material of the anchor surface has, to the person installing the person anchor unit, an unknown thickness and the anchor surface may comprise one or more layers of paint of unknown thickness. Both the thickness of the paint and the magnetizable material may change across the anchor surface. Thus, it is not possible to know the connection strength between the person anchor unit and the anchor surface.

However, the person installing the person anchor unit can utilize the at least one test unit to test if the anchor surface has the necessary magnetic properties to be used as an anchor surface for person fall safety. Usually, the national law determines whether the connection strength is sufficient for the person anchor unit to be used as a fall safety unit.

Actuation of the tool connection point, displaces the first displacement member from a retracted position to an extended position, causing the first displacement member at the extended position to engage the anchor surface.

The connection strength is tested by actuation of the tool connection point with a threshold force to the displacement member by actuation of the tool connection point, where the threshold force corresponds to an approved connection strength. If the displacement member displaces the person anchor unit relative to the anchor surface, then the connection strength is below the approved connection strength and the person anchor unit cannot be used as fall safety. Thus, the person anchor unit must be relocated, and a new test initiated. If the displacement member does not displace the person anchor unit relative to the anchor surface, when the connection strength is above the approved connection strength and the person anchor unit can be used as fall safety.

The displacement member has an additional function, since the permanent magnets are so strong that a person will not be able to remove the person anchor unit from an anchor surface comprising magnetizable material by pulling, nor will the person be able to attach the person anchor unit to the anchor surface comprising magnetizable material since the magnetic attracting will cause the person anchor unit to be violently forced towards the anchor surface and the position will be random. However, when the displacement member is in the extended position then the person anchor unit can be handled by a person and the person anchor unit can be removed from the surface and/or repositioned.

The tool connection point may be a bolt with a head shaped substantially hexagonal, square, or similar and may include a flange extending substantially parallel an axis defined by the connection surface. (T-bolt, hex bolt, square bolt). In another embodiment, the tool connection point may be connected to a hydraulic system.

The anchor point comprises a mean of attaching a shock absorber or a safety line. The safety line may comprise a shock absorber to reduce the energy created by gravity during a fall of the person attached to the anchor point.

In some embodiments, the anchor point may comprise a shock absorber.

The first displacement member may comprise a foot adapted to engage the anchor surface wherein the foot is fitted with a rubber cap or the like to prevent scratches in the anchor surface and to stabilize the person anchor unit when the first displacement member is in the extended position.

The rubber cap may be made of EPDM rubber.

In an aspect, the person anchor unit may comprise two or more test units.

The two or more test units may be evenly distributed across the person anchor unit, allowing the one or more permanent magnets to uniformly attach to the anchor surface by an even distribution of displacement members.

The person anchor unit may comprise two test units and the one or more permanent magnets may be positioned between the two test units.

Thus, additional test units will increase the usability of the person anchor unit and increase the safety as several points can be tested.

In an aspect, the at least one test unit may comprise a tool gear and a first displacement gear being interconnected. The tool gear is connected to the tool connection point. The first displacement member is displaceable connected to the first displacement gear and rotation of the first displacement gear causes displacement of the first displacement member.

Thereby, the displacement of the first displacement member can actuated by simple rotation of the tool connection point such as using a torque wrench which is readably available.

In an aspect, the first displacement gear may comprise a first central bore and the first displacement member extend through the first central bore. The first central bore and the first displacement member may be complementarily threaded and wherein the at least one test unit comprises means for preventing rotation of the displacement member.

Means for preventing rotation of the displacement member may comprise of the displacement member having a head comprising at least two sides such as three, four, five, six, seven or eight sides with the displacement chamber being mutually shaped.

In another embodiment, the means for preventing rotation of the displacement member may comprise of the displacement member having a substantially toothed wheel shaped head with the displacement chamber being mutually shaped.

In a further embodiment, the means for preventing rotation of the displacement member may comprise the displacement member having an oval-shaped head with the displacement chamber being mutually shaped.

The means for preventing rotation may be a rod extending through an elongated channel in the displacement member.

In an aspect, the at least one test unit may comprise a second displacement gear connected to the tool gear and a second displacement member being displaceably connected to the second displacement gear and wherein rotation of the second displacement gear causes displacement of the second displacement member between the retracted position and the extended position, wherein the second displacement member at the extended position engage the anchor surface.

Thereby, the actuation of the tool gear will cause simultaneous displacement of both the first and second displacement members and the two displacement members will make the procedure of testing, installing and positioning even more easy.

The use of first and second in the application is used to differentiate parts of the person anchor unit and thus the first is not more preferred than the second. Furthermore, the second displacement member or displacement gear may have the same features as presented for the first displacement member or the first displacement gear. The same goes for any other part denoted first or second in the description or in the claims. Furthermore, the invention is not limited to only a first or second as the person anchor unit may comprise a third or more parts.

In an aspect, the at least one test unit may comprise a first displacement chamber, wherein part of the first displacement member is displaceable and positioned within the first displacement chamber. The first displacement chamber and the first displacement member may be complementarily shaped to prevent rotation of the first displacement member.

Thereby, the displacement of the first displacement member is stabilized by the complementary first displacement chamber.

In an embodiment, the at least one test unit may comprise a second displacement chamber, wherein part of the second displacement member is displaceable and positioned within the second displacement chamber. The second displacement chamber and the second displacement member may be complementarily shaped to prevent rotation of the second displacement member.

Thereby, the displacement of the second displacement member is stabilized by the complementary second displacement chamber.

In an aspect, the first displacement member may comprise a first flange extending substantially perpendicular to a longitudinal axis defined by the displacement member, wherein the first flange may be adapted to engage the first displacement chamber to prevent rotation of the displacement member.

The first flange may be positioned at the top of the displacement member.

In another embodiment, the first flange may be placed at the top of the displacement member.

The first flange may comprise between 2 and 8 sides with the displacement chamber being mutually shaped.

In another embodiment, the first flange may comprise one or more cogs with the displacement chamber being mutually shaped.

In a further embodiment, the first flange may comprise a plurality of cogs with the displacement chamber being mutually shaped.

In a still further embodiment, the first flange may comprise the shape of an oval with the displacement chamber being mutually shaped.

In an aspect, the person anchor unit may comprise a shock absorber connected to the anchor point. The shock absorber will further increase the fall safety.

In an aspect, at least one of the at least one test unit may comprise a hydraulic system actuated through the tool connection point for displacement of the first displacement member.

The hydraulic system may be actuated through the tool connection point for displacement of the first displacement member by applying a force via a hydraulic cylinder.

The tool engaging at the tool connection point might be a pump handle.

The hydraulic system may be hydraulic jack, where the tool is the pump handle and pumping will cause displacement of the first displacement member.

In an aspect, the first displacement member may comprise a first head with a color, wherein the first head is visible in the retracted position.

The second displacement member may comprise a second head with a color, wherein the second head is visible in the retracted position
The first and/or second displacement member should be at the extended position when attaching the person anchor unit to the anchor surface. The first and/or second displacement member are at the extended position when attaching the person anchor unit to the anchor surface, such that the magnetic attraction force is reduced significantly allowing the person anchor unit to be handled by a person. The head and color are not visible when the first and/or the second displacement member are at the extended position. Thus, the color can act as an indicator of whether the person anchor unit may be used as fall safety. If the color is not visible, then it may not be used as fall safety.

When the first displacement member is in the retracted position, the first head with a color is visible when looking at the at least one test unit comprising the first displacement member, signaling that the person anchor unit is ready to be attached to the anchor surface.

In an embodiment, the test unit may comprise a top plate with at least a first aperture wherein the first head extent into the aperture in the retracted position thereby making the color visible to the person using the person anchor point.

An object of the invention is achieved by a kit comprising a person anchor unit according to one or more of the previous described embodiments and a tool adapted to connect to the tool connection point.

The kit may include a shock absorber.

In an aspect, the tool is a torque wrench.

The torque wrench may be manually actuated and operated by the skilled person.

The torque wrench may comprise only mechanical elements interacting with each other actuated by the skilled person using a handle to apply torque to a head engaging the tool connection point.

The torque wrench may be an electric torque wrench, also known as electric torque tool.

The torque wrench may be a hydraulic torque wrench, also known as a hydraulic torque tool.

The torque wrench may be a pneumatic torque wrench, also known as pneumatic torque tool, or be a tool with similar outputs as the above mentioned.

An object of the invention is achieved by a method for testing connection strength between an anchor surface comprising magnetizable material and a person anchor unit comprising one or more permanent magnets and a displacement member.

The method comprises steps of
- attaching the person anchor unit to the anchor surface;
- displacing the displacement member towards the anchor surface; whilst
- applying a threshold force being equal to an approved connection strength to the displacement member;
- testing whether the displacement member causes displacement of the person anchor unit relative to the anchor surface.

The skilled person is thereby able to attach the person anchor unit to the anchor surface, and test if applying a threshold force equal to an approved connection strength to the displacement member by actuation of the tool connection point causes displacement of the displacement member relative to the anchor surface, thus testing the connection strength between the anchor surface and the person anchor unit.

The person anchor unit may comprise two or more displacement members.

The step of attaching the person anchor unit may include displacing the displacement member to the extended position before placing the person anchor unit against the anchor surface followed by displacing the displacement member to the retracted position.

The threshold force may be applied using a torque wrench.

In an aspect, when the displacement force is below a threshold force, the method comprises further steps of
- removing the person anchor unit from the anchor surface;
- re-attaching the person anchor unit to the anchor surface at a different position;
- repeating the steps of displacing, applying and testing.

The skilled person would know that if an applied threshold force equal to an approved connection strength to the displacement member by actuation of the tool connection point does cause displacement of the displacement member relative to the anchor surface, then the person anchor unit must be removed from the anchor surface and be reattached to a different position on the anchor surface, causing a repetition and evaluation of the steps of displacing, applying, and testing the connection strength between the person anchor unit and the anchor surface.

The step of removing may include displacing the displacement member to the extended position such that the person anchor unit can be removed by a person.

In an aspect, the person anchor unit used in the method may be according to one or more of the previous described embodiments.

### Description of the Drawing

Embodiments of the invention will be described in the figures, whereon:
- Fig. 1: illustrates a schematic of a person anchor unit;
- Fig. 2: illustrates a person anchor unit;
- Fig. 3: illustrates an exploded view of the person anchor unit;
- Fig. 4: illustrates an exploded view of a test unit;
- Fig. 5: illustrates a cross-section of the test unit;
- Fig. 6: illustrates a bottom view of the person anchor unit; and
- Fig. 7: illustrates a person installing the person anchor unit on an anchor surface.

### Detailed Description of the Invention

| **Item** | **No** |
|---|---|
| Person anchor unit | 10 |
| Connection side | 12 |
| Connection surface | 14 |
| Anchor point | 20 |
| Shock absorber | 22 |
| Permanent magnet | 30 |
| Test unit | 40, 40A, 40B... |
| Displacement member | 42I, 42II |
| Flange | 43I, 43II |
| Retracted position | 44 |
| Extended position | 46 |
| Head | 48I, 48II |
| Tool connection point | 50 |
| Tool gear | 52 |
| Displacement gear | 54I, 54II |
| Central bore | 56I, 56II |
| Displacement chamber | 58I, 58II |
| Top plate | 60 |
| Aperture | 62 |
| Safety line | 80 |
| Anchor surface | 90 |

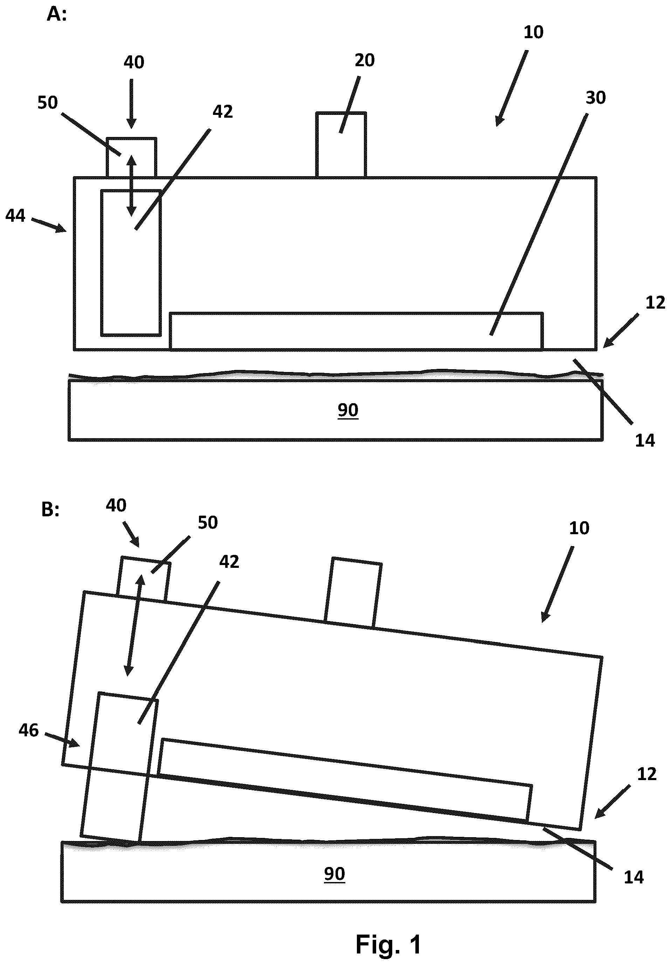

Fig. 1 illustrates a schematic of a person anchor unit 10.

The person anchor unit 10 comprises a connection side 12 comprising a connection surface 14 adapted for facing an anchor surface 90 comprising magnetizable material. The anchor surface 90 is shown as having an uneven surface which may be due to a paint layer.

The person anchor unit 10 comprises an anchor point 20 for attaching a safety line 80 such that the person anchor unit 10 can be used for fall safety.

The person anchor unit 10 shown schematically, comprises a permanent magnet 30 positioned at the connection surface 14. The connection surface 14 is preferably designed to increased friction with the anchor surface.

The person anchor unit 10 comprises a test unit 40 for testing the connection strength between the permanent magnet 30 and the anchor surface.

The test unit 40 comprises a displacement member 42 being displaceable between a retracted position 44 (see Fig. 1A) and an extended position 46 (see Fig. 1B), wherein the displacement member 42 at the extended position 46 engage the anchor surface 90.

The test unit 40 further comprises a tool connection point 50 mechanically linked to the displacement member 42, wherein actuation of the tool connection point 50 causes displacement of the first displacement member 42 between the retracted position 44 and the extended position 46. If the person who actuates the tool connection point 50 knows the actuation force, then the connection strength can be calculated. If the connection strength is above a threshold connection strength, then the person anchor unit 10 can be used for fall safety.

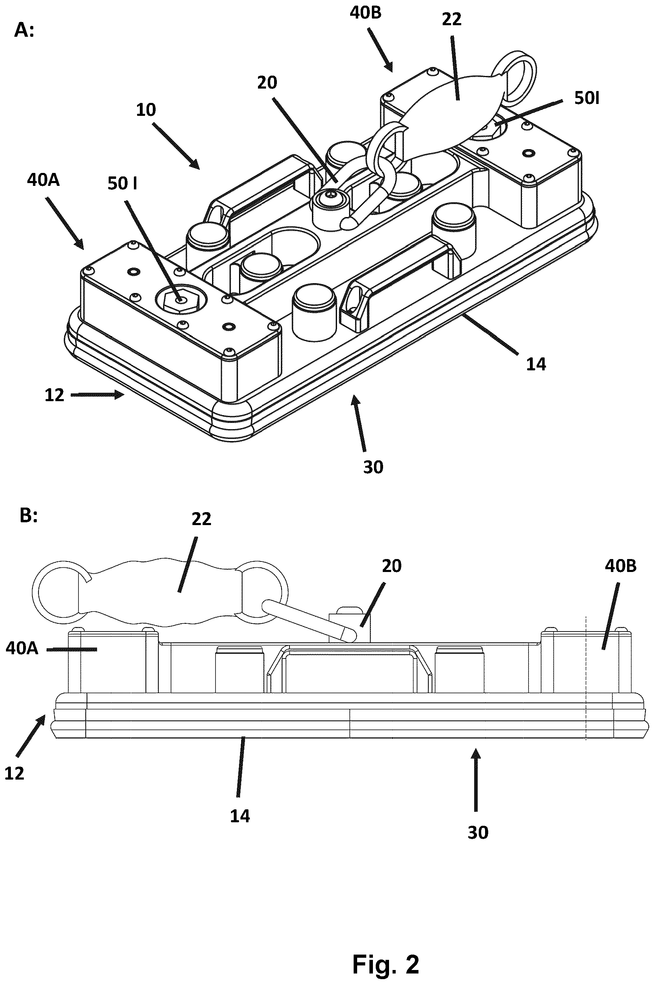

Fig. 2 illustrates a person anchor unit 10 from a top view (A) and a side view (B).

The person anchor unit 10 comprises a connection side 12 comprising a connection surface 14 adapted for facing an anchor surface 90 comprising magnetizable material.

The person anchor unit 10 comprises an anchor point 20 including a shock absorber 22 for attaching a safety line 80 such that the person anchor unit 10 can be used for fall safety.

The person anchor unit 10 comprises one or more (not shown) permanent magnets 30 positioned at the connection surface 14. The connection surface 14 is preferably designed to increase friction with the anchor surface.

The person anchor unit 10 comprises two test units 40A, 40B for testing the connection strength between the permanent magnet 30 and the anchor surface 90. The one or more permanent magnets are placed between the two test units 40A, 40B, thereby handling of the person anchor unit 10 becomes easier. Each test unit 50A, 50B comprises a tool connection point 50A, 50B.

The test unit 50A, 50B does not need to be similar nor identical, however in most cases they will be at least similar.

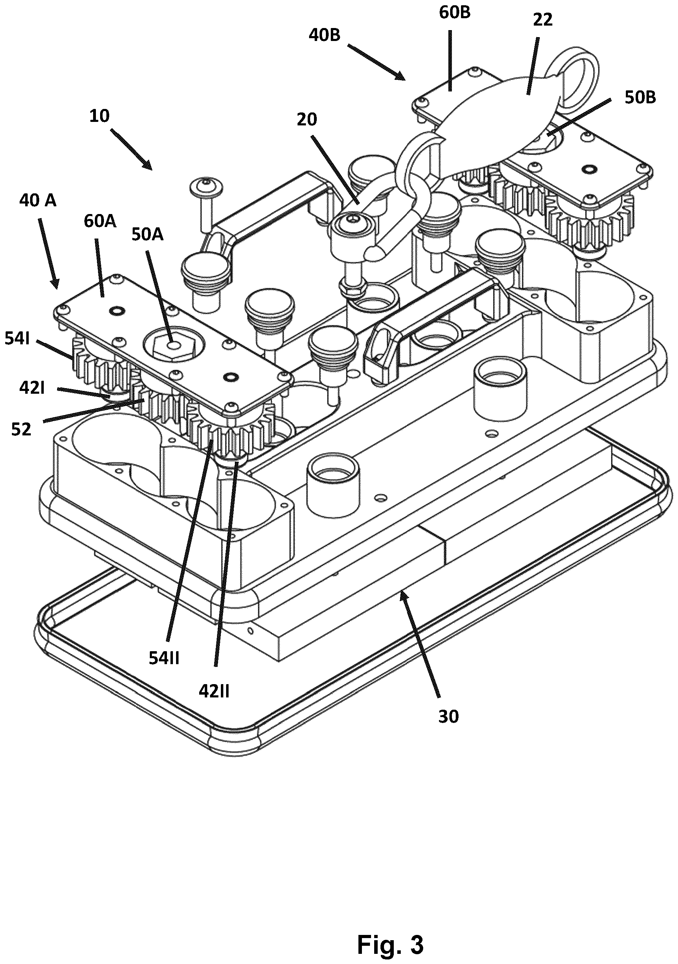

Fig. 3 illustrates an exploded view of the person anchor unit 10 disclosed in Fig. 2.

The test unit 50A will be described in detail, however the second test unit 50B has the same features.

The test unit 50A comprises a first displacement member 42I and a second displacement member 42II displaceable between a retracted position 44 and an extended position 46, wherein the first displacement member 42I and the second displacement member 42II at the extended position 46 engage the anchor surface 90 during use.

The connection point 50 is mechanically linked to the first displacement member 42I and the second displacement member 42II, wherein actuation of the tool connection point 50 causes displacement of both the first displacement member 42 and the second displacement member 42II between the retracted position 44 and the extended position 46.

The test unit 50A comprises a tool gear 52, a first displacement gear 54I, and a second displacement gear 54II being interconnected with the tool gear 52 at a center. The tool gear 52 is connected to the tool connection point 50, wherein the first displacement member 42I and the second displacement member 42II is displaceable connected to respectively the first displacement gear 52I and the second displacement gear 54II. Rotation of the first displacement gear 54I and the second displacement gear 54II causes displacement of the first displacement member 42I and the second displacement member 42II.

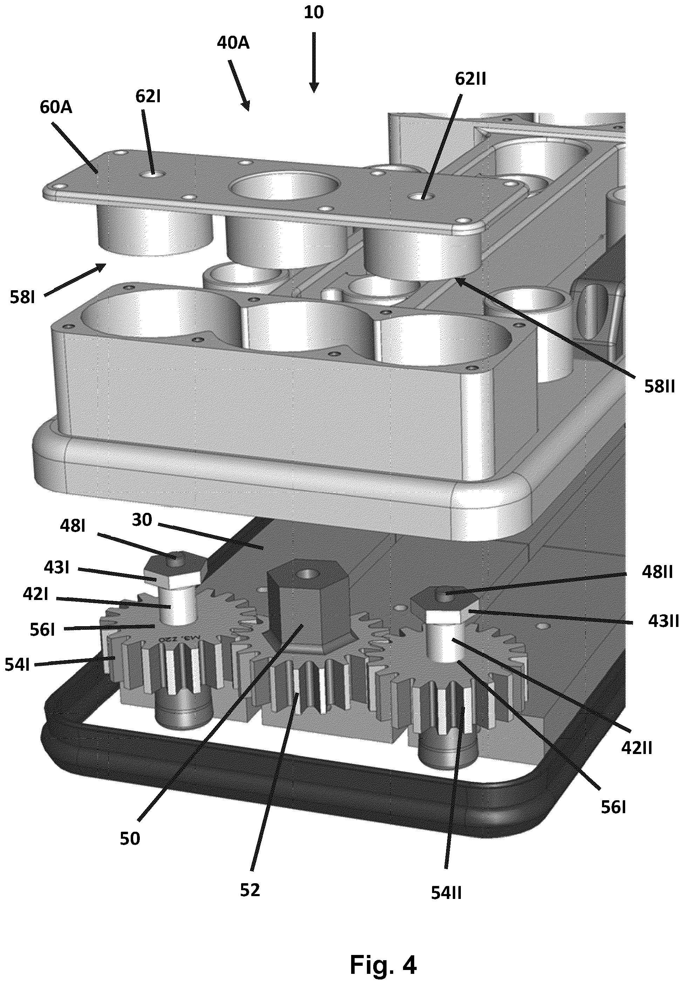

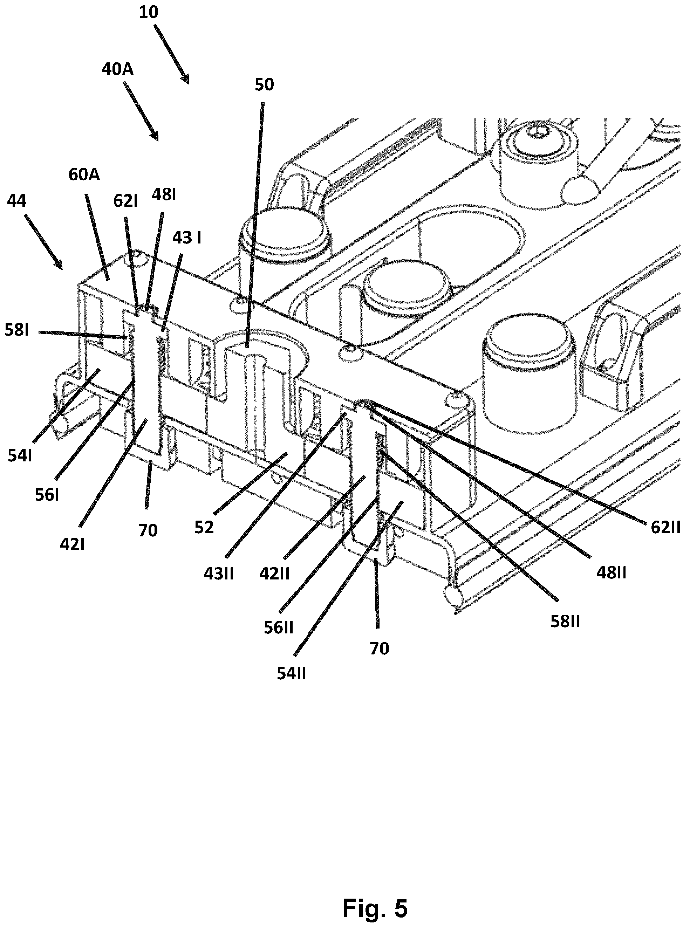

Fig. 4 and 5 disclose further features of the test unit 40A.

Fig. 4 illustrates an exploded view of a test unit 40A and Fig. 5 illustrates the cross-section of the test unit 40A. The test unit 40A comprises the features described in Fig. 3.

The test unit 40A further comprises a first displacement chamber 58I, wherein part of the first displacement member 52I is displaceable and positioned within the first displacement chamber 58I, and a second displacement chamber 58II, wherein part of the second displacement member 52II is displaceable and positioned within the second displacement chamber 58I.

The first displacement chamber 58I and the first displacement member 42I are complementarily shaped to prevent rotation of the first displacement member 42I. Likewise, the second displacement chamber 58II and the second displacement member 42II are complementarily shaped to prevent rotation of the second displacement member 42II.

The first displacement member 42I comprises a first flange 43I extending substantially perpendicular to a longitudinal axis defined by the displacement member 42I, wherein the first flange 43I is adapted to engage the first displacement chamber 58I to prevent rotation of the displacement member 42I. In this case the first flange 43I is hexagonal and the first displacement chamber 58I has a complementary shape.

Likewise, the second displacement member 42II comprises a second flange 43II extending substantially perpendicular to a longitudinal axis defined by the second displacement member 42II, wherein the second flange 43II is adapted to engage the second displacement chamber 58II to prevent rotation of the second displacement member 42II. In this case the second flange 43II is hexagonal and the second displacement chamber 58II has a complementary shape.

The test unit 40A comprises a top 60A with a first aperture 62I and a second aperture 62II.

Both the first displacement member 42I and the second displacement member 42II respectfully comprises a first head 48I and a second head 48II with a color, wherein the first head 48I and the second head 48II are visible in the retracted position 44 as the first head 48I and the second head 48II extend into the first aperture 62I and the second aperture 62II.

The color may be any color such as green.

The first displacement member 42I and the second displacement member 42II are fitted with a first and second cap 70I, 70II for engaging the anchor surface 90 without scratching.

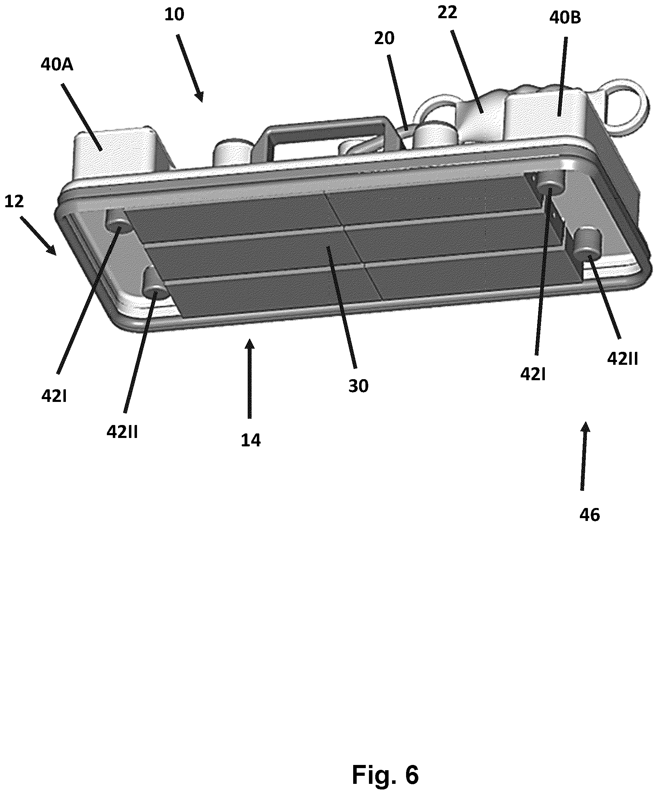

Fig. 6 illustrates a bottom view of the person anchor unit 10 comprising six permanent magnets. Here the first and second displacement member 42I, 42II of the first test unit 40A are in the retracted position, while the first and second displacement member 42I, 42II of the second test unit 40B are in the retracted position 46.

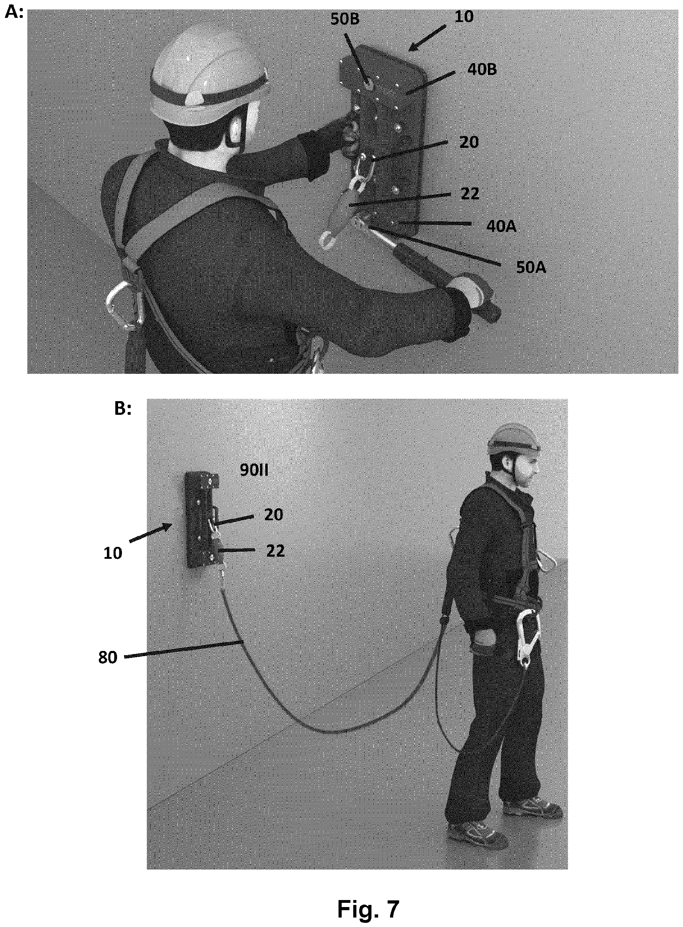

Fig. 7 illustrates a person installing the person anchor unit 10 on an anchor surface 90 by using a torque wrench. The installation may be performed as described in anyone of method claims 13-15.

In figure 7B, the same person is attached to the person anchor unit 10 by a shock absorber 22 and a safety line 80.

## Claims

1. A person anchor unit (10) for person fall safety, the person anchor unit (10) comprising
- a connection side (12) comprising a connection surface (14) adapted for facing an anchor surface (90) comprising magnetizable material; and
- an anchor point (20) for attaching a safety line (80);
- one or more permanent magnets (30) positioned at or near the connection surface (14); and
- at least one test unit (40) for testing the connection strength between the one or more permanent magnets (30) and the anchor surface (90), the at least one test unit (40) comprising
- a first displacement member (42I) being displaceable between a retracted position (44) and an extended position (46), wherein the first displacement member (42I) at the extended position (46) engage the anchor surface (90);
- a tool connection point (50) mechanically linked to the first displacement member (42I), wherein actuation of the tool connection point (50) causes displacement of the first displacement member (42I) between the retracted position (44) and the extended position (46).

2. The person anchor unit (10) according to claim 1, wherein the person anchor unit (10) comprises two or more test units (40A, 40B, ...).

3. The person anchor unit (10) according to claim 1 or 2, wherein the at least one test unit (40) comprises a tool gear (52) and a first displacement gear (54I) being interconnected, the tool gear (52) being connected to the tool connection point (50), wherein the first displacement member (42I) being displaceably connected to the first displacement gear (52I), wherein rotation of the first displacement gear (54I) causes displacement of the first displacement member (42I).

4. The person anchor unit (10) according to claim 3, wherein the first displacement gear (54I) comprises a first central bore (56I) and the first displacement member (42I) extends through the first central bore (56I), wherein the first central bore (56I) and the first displacement member (42I) are complementarily threaded and wherein the at least one test unit (40) comprises means for preventing rotation of the displacement member (42I).

5. The person anchor unit (10) according to anyone of claims 3-4, wherein the at least one test unit (40) comprises a second displacement gear (54II) connected to the tool gear (52) and a second displacement member (42II) being displaceable connected to the second displacement gear (54II), wherein rotation of the second displacement gear (42II) causes displacement of the second displacement member (42II) between the retracted position (44) and the extended position (46), wherein the second displacement member (42II) at the extended position (46) engage the anchor surface (90).

6. The person anchor unit (10) according to anyone of claims 1-5, wherein the at least one test unit (40) comprises a first displacement chamber (58I), wherein part of the first displacement member (52I) is displaceable and positioned within the first displacement chamber (58I), the first displacement chamber (58I) and the first displacement member (42I) being complementarily shaped to prevent rotation of the first displacement member (42I).

7. The person anchor unit (10) according to claim 6, wherein the first displacement member (42I) comprises a first flange (43I) extending substantially perpendicular to a longitudinal axis defined by the displacement member (42I), wherein the first flange (43I) is adapted to engage the first displacement chamber (58I) to prevent rotation of the displacement member (42I).

8. The person anchor unit (10) according to anyone of claims 1-7, wherein the person anchor unit (10) comprises a shock absorber (22) connected to the anchor point (20).

9. The person anchor unit (10) according to anyone of claims 1-8, wherein at least one of the at least one test unit (10) comprises hydraulic system actuated through the tool connection point (50) for displacement of the first displacement member (42I).

10. The person anchor unit (10) according to anyone of claims 1-9, the first displacement member (42I) comprises a first head (48I) with a color, wherein the first head (48I) is visible in the retracted position (44).

11. A kit comprising
- a person anchor unit (10) according to anyone of claims 1-10;
- a tool adapted to connect to the tool connection point (50).

12. A kit according to claim 11, wherein the tool is a torque wrench.

13. A method for testing connection strength between an anchor surface (90) comprising magnetizable material and a person anchor unit (10) comprising one or more permanent magnets (30) and a displacement member (42), the method comprising steps of
- attaching the person anchor unit (10) to the anchor surface (90);
- displacing the displacement member (42) towards the anchor surface (90); whilst
- applying a threshold force being equal to an approved connection strength to the displacement member (42);
- testing whether the displacement member (42) causes displacement of the person anchor unit (10) relative to the anchor surface (90).

14. The method according to claim 13, when the displacement force is below a threshold force, the method comprises further steps of
- removing the person anchor unit (10) from the anchor surface (90);
- re-attaching the person anchor unit (10) to the anchor surface (90) at a different position;
- repeating the steps of displacing (120), applying (130) and testing (140).

15. The method according to claim 13 or 14, wherein the person anchor unit (10) is according to anyone of claims 1-10.

## Patentansprüche

1. Personenverankerungseinheit (10) zur Sturzsicherung von Personen, wobei die Personenverankerungseinheit (10) Folgendes umfasst:
- eine Verbindungsseite (12), die eine Verbindungsfläche (14) umfasst, die dazu eingerichtet ist, einer Verankerungsfläche (90), die magnetisierbares Material umfasst, zugewandt zu sein; und
- einen Verankerungspunkt (20) zum Befestigen einer Sicherungsleine (80);
- einen oder mehrere Permanentmagnete (30), die an oder nahe der Verbindungsfläche (14) positioniert sind; und
- mindestens eine Testeinheit (40) zum Testen der Verbindungsfestigkeit zwischen dem einen oder den mehreren Permanentmagneten (30) und der Verankerungsfläche (90), wobei die mindestens eine Testeinheit (40) Folgendes umfasst:
- ein erstes Verschiebungselement (42I), das zwischen einer eingefahrenen Position (44) und einer ausgefahrenen Position (46) verschiebbar ist, wobei das erste Verschiebungselement (42I) an der ausgefahrenen Position (46) in die Verankerungsfläche (90) eingreift;
- einen Werkzeugverbindungspunkt (50), der mit dem ersten Verschiebungselement (42I) mechanisch gekoppelt ist, wobei eine Betätigung des Werkzeugverbindungspunkts (50) eine Verschiebung des ersten Verschiebungselements (421) zwischen der eingefahrenen Position (44) und der ausgefahrenen Position (46) bewirkt.

2. Personenverankerungseinheit (10) nach Anspruch 1, wobei die Personenverankerungseinheit (10) zwei oder mehr Testeinheiten (40A, 40B, **...)** umfasst.

3. Personenverankerungseinheit (10) nach Anspruch 1 oder 2, wobei die mindestens eine Testeinheit (40) ein Werkzeugzahnrad (52) und ein erstes Verschiebungszahnrad (54I) umfasst, die miteinander verbunden sind, wobei das Werkzeugzahnrad (52) mit dem Werkzeugverbindungspunkt (50) verbunden ist, wobei das erste Verschiebungselement (421) verschiebbar mit dem ersten Verschiebungszahnrad (52I) verbunden ist, wobei eine Drehung des ersten Verschiebungszahnrads (54I) eine Verschiebung des ersten Verschiebungselements (42I) bewirkt.

4. Personenverankerungseinheit (10) nach Anspruch 3, wobei das erste Verschiebungszahnrad (54I) eine erste zentrale Bohrung (561) umfasst und das erste Verschiebungselement (42I) sich durch die erste zentrale Bohrung (56I) erstreckt, wobei die erste zentrale Bohrung (56I) und das erste Verschiebungselement (42I) ein komplementäres Gewinde aufweisen und wobei die mindestens eine Testeinheit (40) Mittel zum Verhindern einer Drehung des Verschiebungselements (42I) umfasst.

5. Personenverankerungseinheit (10) nach einem der Ansprüche 3-4, wobei die mindestens eine Testeinheit (40) ein zweites Verschiebungszahnrad (54II), das mit dem Werkzeugzahnrad (52) verbunden ist, und ein zweites Verschiebungselement (42II), das verschiebbar mit dem zweiten Verschiebungszahnrad (54II) verbunden ist, umfasst, wobei eine Drehung des zweiten Verschiebungszahnrads (42II) eine Verschiebung des zweiten Verschiebungselements (42II) zwischen der eingefahrenen Position (44) und der ausgefahrenen Position (46) bewirkt, wobei das zweite Verschiebungselement (42II) an der ausgefahrenen Position (46) in die Verankerungsfläche (90) eingreift.

6. Personenverankerungseinheit (10) nach einem der Ansprüche 1-5, wobei die mindestens eine Testeinheit (40) eine erste Verschiebungskammer (58I) umfasst, wobei ein Teil des ersten Verschiebungselements (52I) verschiebbar und innerhalb der ersten Verschiebungskammer (58I) positioniert ist, wobei die erste Verschiebungskammer (581) und das erste Verschiebungselement (42I) komplementär geformt sind, um eine Drehung des ersten Verschiebungselements (42I) zu verhindern.

7. Personenverankerungseinheit (10) nach Anspruch 6, wobei das erste Verschiebungselement (42I) einen ersten Flansch (43I) umfasst, der sich im Wesentlichen senkrecht zu einer Längsachse erstreckt, die durch das Verschiebungselement (42I) definiert ist, wobei der erste Flansch (43I) dazu eingerichtet ist, in die erste Verschiebungskammer (58I) einzugreifen, um eine Drehung des Verschiebungselements (42I) zu verhindern.

8. Personenverankerungseinheit (10) nach einem der Ansprüche 1-7, wobei die Personenverankerungseinheit (10) einen Stoßdämpfer (22) umfasst, der mit dem Verankerungspunkt (20) verbunden ist.

9. Personenverankerungseinheit (10) nach einem der Ansprüche 1-8, wobei mindestens eine der mindestens einen Testeinheit (10) ein Hydrauliksystem umfasst, das durch den Werkzeugverbindungspunkt (50) zur Verschiebung des ersten Verschiebungselements (42I) betätigt wird.

10. Personenverankerungseinheit (10) nach einem der Ansprüche 1-9, wobei das erste Verschiebungselement (42I) einen ersten Kopf (48I) mit einer Farbe umfasst, wobei der erste Kopf (48I) in der eingefahrenen Position (44) sichtbar ist.

11. Ausrüstung, die Folgendes umfasst:
- eine Personenverankerungseinheit (10) nach einem der Ansprüche 1-10;
- ein Werkzeug, das dazu eingerichtet ist, mit dem Werkzeugverbindungspunkt (50) verbunden zu sein.

12. Ausrüstung nach Anspruch 11, wobei das Werkzeug ein Drehmomentschlüssel ist.

13. Verfahren zum Testen der Verbindungsfestigkeit zwischen einer Verankerungsfläche (90), die magnetisierbares Material umfasst, und einer Personenverankerungseinheit (10), die einen oder mehrere Permanentmagnete (30) und ein Verschiebungselement (42) umfasst, wobei das Verfahren die folgenden Schritte umfasst:
- Befestigen der Personenverankerungseinheit (10) an der Verankerungsfläche (90);
- Verschieben des Verschiebungselements (42) in Richtung der Verankerungsfläche (90); währenddessen
- Aufbringen einer Schwellenkraft, die gleich einer zugelassenen Verbindungsfestigkeit ist, auf das Verschiebungselement (42);
- Testen, ob das Verschiebungselement (42) eine Verschiebung der Personenverankerungseinheit (10) relativ zu der Verankerungsfläche (90) bewirkt.

14. Verfahren nach Anspruch 13, wobei, wenn die Verschiebungskraft unterhalb einer Schwellenkraft liegt, das Verfahren die weiteren Schritte umfasst:
- Entfernen der Personenverankerungseinheit (10) von der Verankerungsfläche (90);
- Wiederbefestigen der Personenverankerungseinheit (10) an einer anderen Position an der Verankerungsfläche (90);
- Wiederholen der Schritte des Verschiebens (120), des Aufbringens (130) und des Testens (140).

15. Verfahren nach Anspruch 13 oder 14, wobei die Personenverankerungseinheit (10) diejenige nach einem der Ansprüche 1-10 ist.

## Revendications

1. Unité d'ancrage de personne (10) pour la sécurité contre les chutes de personnes, l'unité d'ancrage de personne (10) comprenant
- un côté de connexion (12) comprenant une surface de connexion (14) adaptée pour faire face à une surface d'ancrage (90) comprenant un matériau magnétisable ; et
- un point d'ancrage (20) pour attacher une ligne de sécurité (80) ;
- un ou plusieurs aimants permanents (30) positionnés au niveau ou à proximité de la surface de connexion (14) ; et
- au moins une unité de test (40) pour tester la force de connexion entre un ou plusieurs aimants permanents (30) et la surface d'ancrage (90), l'au moins une unité de test (40) comprenant
- un premier élément de déplacement (42I) pouvant être déplacé entre une position rétractée (44) et une position prolongée (46), dans laquelle le premier élément de déplacement (42I) à la position prolongée (46) entre en prise avec la surface d'ancrage (90) ;
- un point de connexion d'outil (50) lié mécaniquement au premier élément de déplacement (421), dans laquelle l'actionnement du point de connexion d'outil (50) provoque le déplacement du premier élément de déplacement (421) entre la position rétractée (44) et la position prolongée (46).

2. Unité d'ancrage de personne (10) selon la revendication 1, dans laquelle l'unité d'ancrage de personne (10) comprend deux unités de test ou plus (40A, 40B, ...).

3. Unité d'ancrage de personne (10) selon la revendication 1 ou 2, dans laquelle l'au moins une unité de test (40) comprend un engrenage d'outil (52) et un premier engrenage de déplacement (54I) interconnectés, l'engrenage d'outil (52) étant connecté au point de connexion d'outil (50), dans laquelle le premier élément de déplacement (421) est connecté de manière déplaçable au premier engrenage de déplacement (521), dans laquelle la rotation du premier engrenage de déplacement (541) provoque le déplacement du premier élément de déplacement (42I).

4. Unité d'ancrage de personne (10) selon la revendication 3, dans laquelle le premier engrenage de déplacement (541) comprend un premier alésage central (56I) et le premier élément de déplacement (42I) se prolonge à travers le premier alésage central (561), dans laquelle le premier alésage central (56I) et le premier élément de déplacement (42I) sont filetés de manière complémentaire et dans laquelle l'au moins une unité de test (40) comprend des moyens pour empêcher la rotation de l'élément de déplacement (42I).

5. Unité d'ancrage de personne (10) selon l'une quelconque des revendications 3 à 4, dans laquelle l'au moins une unité de test (40) comprend un second engrenage de déplacement (54II) relié à l'engrenage d'outil (52) et un second élément de déplacement (42II) pouvant être déplacé relié au second engrenage de déplacement (54II), dans laquelle la rotation du second engrenage de déplacement (4211) provoque le déplacement du second élément de déplacement (4211) entre la position rétractée (44) et la position prolongée (46), dans laquelle le second élément de déplacement (4211) à la position prolongée (46) entre en prise avec la surface d'ancrage (90).

6. Unité d'ancrage de personne (10) selon l'une quelconque des revendications 1 à 5, dans laquelle l'au moins une unité de test (40) comprend une première chambre de déplacement (58I), dans laquelle une partie du premier élément de déplacement (52I) est déplaçable et positionnée à l'intérieur de la première chambre de déplacement (58I), la première chambre de déplacement (58I) et le premier élément de déplacement (42I) étant formés de manière complémentaire pour empêcher la rotation du premier élément de déplacement (421).

7. Unité d'ancrage de personne (10) selon la revendication 6, dans laquelle le premier élément de déplacement (42I) comprend une première bride (43I) se prolongeant sensiblement perpendiculairement à un axe longitudinal défini par l'élément de déplacement (421), dans laquelle la première bride (43I) est conçue pour entrer en prise avec la première chambre de déplacement (58I) pour empêcher la rotation de l'élément de déplacement (42I).

8. Unité d'ancrage de personne (10) selon l'une quelconque des revendications 1 à 7, dans laquelle l'unité d'ancrage de personne (10) comprend un amortisseur (22) relié au point d'ancrage (20).

9. Unité d'ancrage de personne (10) selon l'une quelconque des revendications 1 à 8, dans laquelle au moins l'une de l'au moins une unité de test (10) comprend un système hydraulique actionné par le point de connexion d'outil (50) pour le déplacement du premier élément de déplacement (421).

10. Unité d'ancrage de personne (10) selon l'une quelconque des revendications 1 à 9, le premier élément de déplacement (421) comprend une première tête (48I) avec une couleur, dans laquelle la première tête (48I) est visible dans la position rétractée (44).

11. Un kit comprenant
- une unité d'ancrage de personne (10) selon l'une quelconque des revendications 1 à 10 ;
- un outil adapté pour se connecter au point de connexion d'outil (50).

12. Kit selon la revendication 11, dans lequel l'outil est une clé dynamométrique.

13. Procédé de test de la force de connexion entre une surface d'ancrage (90) comprenant un matériau magnétisable et une unité d'ancrage de personne (10) comprenant un ou plusieurs aimants permanents (30) et un élément de déplacement (42), le procédé comprenant les étapes consistant à
- fixer l'unité d'ancrage de personne (10) à la surface d'ancrage (90) ;
- déplacer l'élément de déplacement (42) vers la surface d'ancrage (90) ; tandis que
- appliquer une force de seuil égale à une force de connexion approuvée à l'élément de déplacement (42) ;
- tester si l'élément de déplacement (42) provoque un déplacement de l'unité d'ancrage de personne (10) par rapport à la surface d'ancrage (90).

14. Procédé selon la revendication 13, lorsque la force de déplacement est inférieure à une force seuil, le procédé comprend des étapes supplémentaires consistant à
- retirer l'unité d'ancrage de personne (10) de la surface d'ancrage (90) ;
- rattacher l'unité d'ancrage de personne (10) à la surface d'ancrage (90) à une position différente ;
- répéter les étapes de déplacement (120), appliquer (130) et tester (140).

15. Procédé selon la revendication 13 ou 14, dans lequel l'unité d'ancrage de personne (10) est selon l'une quelconque des revendications 1 à 10.
